Europäisches Patentamt

European Patent Office

Office européen des brevets

(11) Veröffentlichungsnummer: **0 201 014**
**B1**

(12) **EUROPÄISCHE PATENTSCHRIFT**

(45) Veröffentlichungstag der Patentschrift: **16.05.90**

(21) Anmeldenummer: **86105791.7**

(22) Anmeldetag: **26.04.86**

(51) Int. Cl.⁵: **A 01 D 34/63, A 01 D 34/73**

(54) **Schneidvorrichtung für Rasenschneidgeräte.**

(30) Priorität: **08.05.85 DE 8513596 u**

(43) Veröffentlichungstag der Anmeldung:
**12.11.86 Patentblatt 86/46**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**FR-A-2 429 551**
**US-A-3 087 298**
**US-A-3 570 229**

(73) Patentinhaber: **Bayerische und Tiroler Sensen-Union GmbH**
**Postfach 1145**
**D-8203 Oberaudorf/Mühlbach (DE)**

(72) Erfinder: **Baudinger, Leopold**
**Bayerische & Tiroler Sensen-Union Postf. 1145**
**D-8203 Oberaudorf/Mühlbach (DE)**

(74) Vertreter: **Dickel, Klaus, Dipl.-Ing. et al**
**Julius-Kreis-Strasse 33**
**D-8000 München 60 (DE)**

Courier Press, Leamington Spa, England.

**Beschreibung**

Die Erfindung betrifft eine Schneidvorrichtung für motorisch angetriebene Rasenschneidgeräte mit einer auf die Antriebswelle des Gerätes aufsetzbaren Kreisscheibe und heirvon ausgehenden Messern, die zumindest in einem Teilbereich zum Hüllkreis der Scheibe tangential ausgerichtete Schneiden aufweisen.

Eine derartige Vorrichtung ist aus der FR—A—2429551 bekannt. Hierbei sind die Schneiden in einer konvexen Weise gekrümmt und sollen Gras und Gegenstände nach außen wegdrücken, womit in nachteiliger Weise eine unebene Rasenoberfläche und eine ungleichmäßige Schnittfläche der Halme verursacht wird. Auch können Gegenstände in gefährlicher Weise nach außen weggeschleudert werden. Die Zentrierung erfolgt nur über eine Mittelöffnung, wodurch den Fertigungstoleranzen enge Grenzen gesetzt sind.

Aus der US—A—3,087,298 ist eine Schneidvorrichtung bekannt, die S-förmig ausgebildet ist und dementsprechend absichtsgemäß Gegenstände nach außen wegschleudern soll. Die Zentrierung erfolgt auch hier nur über eine Mittelöffnung. Es sind auch bereits motorisch angetriebene Rasenschneidgeräte verschiedener Art bekannt, die teilweise über einen Elektromotor oder auch einen Verbrennungsmotor angetrieben werden. Das Messer besteht in aller Regel aus einem auf der Motorwelle gehaltenen Blechstreifen. Da die Gräser durch das senkrecht auftreffende Messerblech abgeschlagen und nicht geschnitten werden, läßt die Schnittqualität dieser Geräte sehr zu wünschen übrig.

Andererseits sind auch motorisch angetriebene Walzenmäher bekannt, die zwar eine saubere Schnittleistung erbringen, jedoch in ihrer Herstellung äußerst kostenaufwendig sind. Auch der Energieverbrauch zum Betrieb dieser Rasenschneidgeräte ist relativ hoch.

Schließlich sind auch sog. Rasentrimmgeräte bekannt, bei welchen ein an der Motorwelle gehaltener Kunststoff-Faden als Messer dient. Auch hiermit sind jedoch eine Reihe gravierender Nachteile verbunden. Der Faden verbraucht sich relativ rasch und muß dementsprechend häufig von der Vorratsrolle nachgezogen werden. Wenn sich der Faden um ein Hindernis schlingt, kann der gesamte Faden abgezogen und die Schneideinrichtung damit unbrauchbar werden. Der Zeitaufwand zur Erneuerung der Fadenlänge ist in jedem Fall beträchtlich. Hindernisse, wie Steine oder Mauerränder, bringen den Faden zum Reißen.

In Kenntnis dieser Nachteile des Standes der Technik liegt der Erfindung die Aufgabe zugrunde, eine Rasenschneidvorrichtung der eingangs genannten Art zur Verfügung zu stellen, die einen glatten, ziehenden Schnitt der Gräser gewährleistet, die Gefahr nach außen weggeschleuderter Objekte verringert und eine sichere Zentrierung, unter Vermeidung von Unwuchtsproblemen ermöglicht.

Gelöst wird diese Aufgabe gemäß der Erfindung dadurch, daß die Kreisscheibe an ihrem äußeren Umfang eine zur Zentrierung der Schneidvorrichtung dienende, umlaufende schulterförmige Verstärkung trägt und die tangential zur Kreisscheibe angeordneten Schneiden gradlini sind. Infolge des spitzen Anstellwinkels zu den zu durchtrennenden Gräsern vollzieht sich ein ziehender Schnitt, wie er auch bei Sensen üblich ist. Die Gräser werden damit einwandfrei abgeschnitten und nicht, wie bei herkömmlichen Geräten üblich, abgeschlagen oder gerissen. Infolge der einwandfreien Schneidwirkung ist auch der Energieverbrauch relativ gering. Die vorzugsweise aus Kunststoff bestehende Schneidvorrichtung besitzt einen äußerst einfachen Aufbau und läßt sich daher kostengünstig herstellen. Da die Materialstärke ein Vielfaches des Nylonfadens ausmacht, ist die Lebensdauer der Schneidvorrichtung auch beträchtlich erhöht.

Die Schneidvorrichtung trägt am Umfang der Kreisscheibe eine zur Zentrierung der Schneidvorrichtung dierende, schulterförmige, umlaufende Verstärkung. Hierdurch wird gerade im Bereich der stärksten Biegemomente, die auf die Messer einwirken können, eine Materialverdikkung und damit eine erhöhte Festigkeit erreicht. Die Innenkante der umlaufenden Verstärkung bietet, eine Schulter, die von einer die Schneidvorrichtung haltenden Zentrierkappe hintergreifbar ist.

Die vorzugsweise im wesentlichen rechteckförmig ausgebildeten Schneiden tragen zweckmäßig eine im Querschnitt von beiden Seiten spitz zulaufende Schneide. Eine solche Schneide erhöht die Schnittqualität der Schneidvorrichtung.

Gemäß einer anderen Ausführungsform kann die Schneide der Messer im Querschnitt auch von einer Seite spitz zulaufen. Es läßt sich hierdurch eine Förderwirkung auf das Schneidgut übertragen.

Die rückwärtige Kante der Messer läuft bevorzugt parallel zur Schneide. Hierdurch ergibt sich eine in der Draufsicht im wesentlichen rechteckförmige Ausbildung der Messer. Es wird hierduch eine Material- und Gewichtseinsparung der Schneidvorrichtung erzielt. Andererseits kann jedoch auch die Rückkante der Messer in einem anderen Winkel zur Schneide verlaufen, so daß sich etwa in der Draufsicht eine im wesentlichen dreieckförmige Gestalt der Messer ergibt.

Bevorzugt trägt die Kreisscheibe der erfindungsgemäßen Schneidvorrichtung eine zentrale Mittelöffnung zur Aufnahme der Antriebswelle des Rasenschneidgerätes. An der Mittelöffnung können zusätzlich eine oder mehrere Keilnuten angeordnet sein, über welche ein formschlüssiger Eingriff mit der Antriebswelle möglich ist, so daß eine sichere Kraftübertragung gewährleistet ist.

Die radial äußere Begrenzung der Messer wird zweckmäßig durch einen zur Kreisscheibe konzentrischen Bogen gebildet. Hierdurch wird sichergestellt, daß beim Betrieb des Rasenschneidgerätes keine Beschädigungen auftreten, wenn die Schneidvorrichtung mit einem Hindernis, wie etwa einem Mauerrand, in Berührung kommt.

Gemäß einer anderen Ausführungsform kann die Schneidvorrichtung mit drei Messern versehen sein, deren Schneiden jeweils einen Winkel von 120° einschließen. Es können jedoch auch vier oder mehr Messer an der Kreisscheibe gehalten sein, wobei, zur Vermeidung einer Unwucht, der Winkelabstand benachbarter Messer jeweils gleich ist.

Weitere Vorteile, Enzelheiten und erfindungswesentliche Merkmale ergeben sich aus der nachfolgenden Beschreibung verschiedener Ausführungsbeispiele der Schneidvorrichtung gemäß der Erfindung, unter Bezugnahme auf die beigefügten Zeichnungen. Dabei zeigt im einzelnen:

Fig. 1 die Draufsicht auf eine Ausführungsform der erfingungsgemäßen Schneidvorrichtung mit zwei Messern,

Fig. 2 eine der Fig. 1 entsprechende Darstellung der Schneidvorrichtung, wobei jedoch bei dieser Ausführungsform drei Messer vorgesehen sind, und

Fig. 3 eine ebenfalls der Fig. 1 entsprechende Darstellung einer Ausführungsform mit vier Messern.

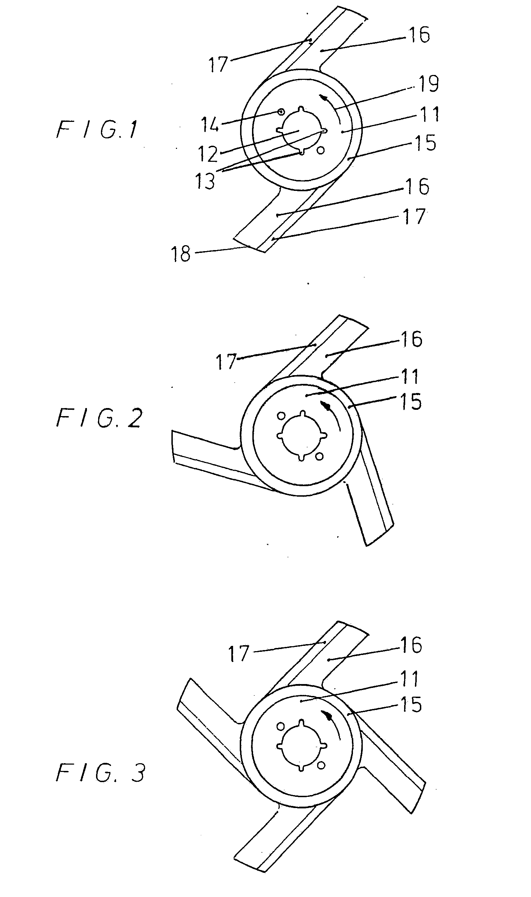

Die in Fig. 1 dargestellte Schneidvorrichtung 10 umfaßt eine Kreisscheibe 11, die vorzugsweise aus einem hochfesten, jedoch flexiblen Kunststoff besteht. Die Kreisscheibe 11 ist mit einer zentralen Mittelöffnung 12 versehen, zur Aufnahme der in den Zeichnungen nicht dargestellten antriebswelle des Rasenschneidgerätes. Die Mittelöffnung 12 trägt auf ihrem Umfang eine oder mehrere Keilnuten 13 für einen formschlüssigen Eingriff mit der Antriebswelle.

Weiterhin trägt die Kreisscheibe 11 zwei zum Mittelpunkt symmetrische Haltebohrungen 14. Die Bohrungen 14 werden von Schrauben durchgriffen, die die Kreisscheibe und die hierauf sitzende, in den Zeichnungen nicht dargestellte, Zentrierkappe mit einem Adapter für das jeweilige Rasenschneidgerät verbinden.

Die Kreisscheibe 11 trägt außerdem an ihrer Peripherie eine umlaufende Randverstärkung 15. Die Vestarkung 15 dient einmal der erhöhten Festigkeit der Scheibe, und andererseits bildet sie eine Schulter, die von der Zentrierkappe hintergriffen wird.

Am Umfang der Kreisscheibe 11 sind bei der in Fig. 1 gezeigten Ausführungsform zwei Messer 16 angeordnet, die einstückig mit der Kreisscheibe 11 ausgebildet sind un sich außen an die umlaufende Randverstärkung 15 anschließen. Die Messer 16 sind im wesentlichen rechteckförmig ausgebildet un tragen entlang der der Drehrichtung zugewandten Seite eine Schneide 17. Die Schneide ist im wesentlichen tangential zum Umfangskreis der Kreisscheibe 11 ausgerichtet. Die Schneiden 17 können von beiden Seiten oder auch nur von einer Seite spitz zulaufen. Bei einseitigem "Anschliff" läßt sich hierdurch ein Materialtransport für das Schneidgut durchführen. Die radial äußere Begrenzungskante 18 der Messer 16 ist abgerundet, wobei die Krümmung einem zur Kreisscheibe 11 konzentrischen Kreis entspricht.

In Fig. 2 ist eine andere Ausführungsform der erfindungsgemäßen Schneidvorrichtung dargestellt. An der umlaufenden Randverstärkung 15 der Kreisscheibe 11 sind in diesem Fall drei Messer 16 gehalten. Auch bei dieser Ausführungsform bildet die Vorderkante der Schneiden 17 im wesentlichen eine Tangente zum Hüllkreis der Kreisscheibe 11. Der Aufbau der Messer 16 hinsichtlich ihrer Größenbemessung und Querschnittsform entspricht der in Fig. 1 dargestellten Ausführungsform.

Eine weitere Ausführungsform ist in Fig. 3 dargestellt. In diesem Fall trägt die Kreisscheibe 11 vier Messer 16, wobei die Schneiden im wesentlichen einen Winkel von 90° zueinander bilden. Auch hier ist die Vorderkante der Schneiden 17 im wesentlichen tangential zum Hüllkreis der Kreisscheibe ausgerichtet. Im übrigen entsprechen sowohl Formgebung als auch Ausbildung der Scheibe 11 als auch der Messer 16 der in Fig. 1 dargestellten Ausführungsform.

Es soll an dieser Stelle noch einmal ausdrücklich angegeben werden, daß es sich bei der vorangehenden Beschreibung lediglich um eine solche beispielhaften Charakters handelt. So fällt auch die Anordnung weiterer Messer 16, die an der Kreisscheibe 11 gehalten sind, in den Rahmen der vorliegenden Erfindung, soweit die Vorderkanten der Schneiden 17 im wesentlichen tangential zum Hüllkries der Kreisscheibe 11 ausgerichtet sind. Wesentlich ist ein Massenausgleich der Messer 16, um keine Unwucht der Gesamtschneidvorrichtung 10 entstehen zu lassen.

**Patentansprüche**

1. Schneidvorrichtung für motorisch angetriebene Rasenschneidgeräte mit einer auf die Antriebswelle des Gerätes aufsetzbaren Kreisscheibe und hiervon ausgehenden Messern (16), die zumindest in einem Teilbereich zum Hüllkreis der Scheibe tangential ausgerichtete Schneiden aufweisen, dadurch gekennzeichnet, daß die Kreisscheibe (11) an ihrem äußeren Umfang eine zur Zentrierung der Schneidvorrichtung dierende, umlaufende, schulterförmige Verstärkung (15) trägt und die tangential zur Kriesscheibe (11) angeordneten Schneiden (17) geradlinig sind.

2. Schneidvorrichtung nach Anspurch 1, dadurch gekennzeichnet, daß die Messer (16) eine im Querschnitt von beiden Seiten spitz zulaufende Schneide (17) tragen.

3. Schneidvorrichtung nach Anspurch 1, dadurch gekennzeichnet, daß die Schneide (17) der Messer (16) im Querschnitt von einer Seite spitz zuläuft.

4. Schneidvorrichtung nach einem der vorangehenden Ansprüche, dadurch gekennzeichnet, daß die Rückkante der Messer (16) parallel zur Schneide (17) verläuft.

5. Schneidvorrichtung nach einem der vorangehenden Ansprüche, dadurch gekennzeichnet, daß die Kreisscheibe (11) mit einer zentralen Mittelöffnung (12) versehen ist.

6. Schneidvorrichtung nach Anspurch 5, dadurch gekennzeichnet, daß an der Mittelöffnung (12) zusätzlich Keilnuten (13) angeordnet sind.

7. Schneidvorrichtung nach einem der vorangehenden Ansprüche, dadurch gekennzeichnet, daß die radial äußere Begrenzung (18) der Messer (16) durch einen zur Kreisscheibe (11) konzentrischen Bogen gebildet wird.

8. Schneidvorrichtung nach einem der vorangehenden Ansprüche, dadurch gekennzeichnet, daß drei Messer (16) an der Kreisscheibe (11) gehalten sind.

9. Schneidvorrichtung nach einem der Ansprüche 1 bis 8, dadurch gekennzeichnet, daß mindestens vier Messer (16) an der Kreisscheibe (11) gehalten sind.

**Revendications**

1. Dispositif coupant pour une tondeuse à gazon à moteur comprenant un disque circulaire (11) qui peut être fixé sur l'arbre de commande, et des lames coupantes (16) partant de ce disque et présentant des tranchants coupants placés en tangeante sur tout au moins une partie de l'enveloppe circulaire du dit disque, caractérisé en ce que le disque circulaire (11) sur le pourtour extérieur porte un renforcement en forme d'épaule (15) servant à centrer le dispositif coupant et en ce que les tranchants coupants (17) placés en tangeante sur le disque circulaire (11) sont droits.

2. Dispositif coupant selon la revendication 1, caractérisé en ce que les lames coupantes (16) ont une coupe transversale qui par en biais des deux côtés vers le tranchant coupant (17).

3. Dispositif coupant selon la revendication 1, caractérisé en ce que la coupe transversale de la lame coupante (16) part en biais d'un côté vers le tranchant (17).

4. Dispositif coupant selon une des revendications précédentes, caractérisé en ce que le dos des lames coupantes (16) est paralléle au tranchant (17).

5. Dispositif coupant selon une des revendications précédentes, caractérisé en ce que le disque circulaire (11) a une ouverture au centre (12).

6. Dispositif coupant selon la revendication 5, caractérisé en ce que l'ouverture au centre (12) est, en plus, munie de rainures de clavetage (13).

7. Dispositif coupant selon une des revendications précédentes, caractérisé en ce que la périphérie radiale (18) des lames coupantes (16) est définie par une ligne courbe qui est concentrique au disque circulaire (11).

8. Dispositif coupant selon une des revendications précédentes, caractérisé en ce que trois lames coupantes (16) sont maintenues par le disque circulaire (11).

9. Dispositif coupant selon une des revendications de 1 à 8, caractérisé en ce que quatre lames coupantes (16) sont maintenues par le disque circulaire (11).

**Claims**

1. Cutting device for motor-driven lawn mowers comprising a circular disc which may be fastened to the drive shaft of the mower and cutting blades (16) extending from said disc having a cutting edge which is at least in part directed tangentially to the enveloping circle of said disc, characterized in said disc (11) being provided at its outer peripherie with an annular reenforcing shoulder (15) for centering said cutting device and said cutting edges (17) which are directed tangentially with respect to said disc (11) being straight.

2. Cutting device according to claim 1, characterized in said cutting blades (16) have a cross-section which is slanted from both sides towards the cutting edge (17).

3. Cutting device according to claim 1, characterized in that the cross-section of said cutting blade (16) is slanted from one side towards the cutting edge (17).

4. Cutting device according to anyone of the preceding claims, characterized in that the rearward edge of the blades (16) is in parallel with respect to the cutting edge (17).

5. Cutting device according to anyone of the preceding claims, characterized in that said circular disc (11) has a central opening (12).

6. Cutting device according to claim 5, characterized in that said central opening (12) is provided with additional keyslots (13).

7. Cutting device according to anyone of the preceding claims, characterized in that the outer peripherie (18) of said cutting blades (16) is defined by a curve line which is concentric with respect to said circular disc (11).

8. Cutting device according to anyone of the preceding claims, characterized in that three cutting blades (16) are held by said circular disc (11).

9. Cutting device according to anyone of claims 1 to 8, characterized by four cutting blades (16) are held by said circular disc (11).

F I G. 1

F I G. 2

F I G. 3